# EUROPÄISCHE PATENTSCHRIFT

(11) **EP 2 196 091 B1**
(45) Veröffentlichungstag und Bekanntmachung des Hinweises auf die Patenterteilung: **08.12.2010**
(21) Anmeldenummer: 08171601.1
(22) Anmeldetag: 15.12.2008
(51) Int. Cl.: A01N 47/44, A01N 43/80, A01N 47/12, A01N 43/40, A01N 31/08, A01N 43/78, A01P 1/00, A01P 3/00

(54) **Synergistische Kombination von einem oder mehreren Fungiziden mit Guanidiniumsalzen**
Synergistic combinations comprising at least one fungicide and a guanidine salt
Combinaisons synergétiques contenant un sel de guanidine et au moins un fongicide

(43) Veröffentlichungstag der Anmeldung: 16.06.2010
(73) Patentinhaber: Straetmans high TAC GmbH, 22143 Hamburg (DE)
(72) Erfinder: Straetmans, Udo, 22143, Hamburg (DE); Straetmans, Felix, 22143 Hamburg (DE)
(74) Vertreter: Raffay & Fleck

(56) Entgegenhaltungen:
- EP-A- 2 000 031
- WO-A-97/17849
- US-A- 4 661 503
- US-B1- 6 342 522

## Beschreibung

Die Erfindung betrifft eine Kombination mit antimikrobieller und/oder fungizider Wirkung von einem oder mehreren Fungiziden aus der Gruppe die IPBC (3-lodpropinylbutylcarbamat), Isothiazolinone, Pyrithion und dessen Na-, Cu- oder Zn-Salze, Thiabendazol, Aryl- oder Alkylphenole, auch substituierte, umfasst, und mindestens einem Guanidiniumsalz.

Derartige Zusammensetzungen sind aus der US-B1-6342522 und der EP 0 891 710 B1 bekannt und dienen generell zur Inhibition des mikrobiellen Wachstums und weisen zahlreiche industrielle und nicht industrielle Anwendungen auf.

Die als Biozide vorbekannten Guanidiniumsalze und auch Polyguanidiniumsalze zeichnen sich dadurch aus, dass sie kationische Verbindungen sind, die durch diese Eigenschaft ihren bioziden Charakter erhalten, so beispielsweise die Salze des Dodecylguanidinins.

So ist es beispielsweise aus dem "Directory of microbicides for the protection of materials", Springer 2005, Seite 726 bis 731 bekannt, dass mittel- und langkettige Guanidinine und Biguanidine, wie beispielsweise Cocospropylenediamine-1,5-bis-Guanidiniumacetate, Bis(Guanidinooctyl)amine triacetate, Poly(hexamethylen-biguanidine) hydrochloride, Di(4'-chlorophenyldiguanido)hexane, Chlorhexidine digluconate, Chlorhexidine diacetate, antimikrobielle Wirkung aufweisen. Die weisen. Die Wirkung wird auf kationische chemische Reaktionen mit Zellmembranen zurückgeführt.

Desweiteren ist bekannt, solche mittel- und langkettigen Guanidiniverbindungen zusammen mit anderen antimikrobiellen und/oder fungiziden Wirkstoffen einzusetzen. Bekannt ist so beispielsweise die Kombination mit IPBC oder Formaldehyddepotstoffen. So lehrt beispielsweise die EP 0 891 710 den kombinierten Einsatz von Dodecylguanidinihydrochlorid und IPBC.

Trotz der zahlreichen bekannten Wirkstoffkombinationen besteht gerade aufgrund der zunehmenden Umweltregulierungen eine Nachfrage nach weiteren und verbesserten und insbesondere formaldehydfreien Konservierungsmethoden. So müssen beispielsweise aufgrund der Verordnungen und Regelungen nicht mehr zur Verfügung stehende Wirkstoffkombinationen ersetzt werden und muss die Wirksamkeit von bekannten Kombinationen gesteigert werden um den neuen Höchstgrenzen gerecht werden zu können. Somit besteht Bedarf an einer erhöhten Wirksamkeit bei gleichzeitig reduzierter Menge an Bioziden. Darüber hinaus besteht ein Bedarf an flüssigen, farbstabilen Produkten mit stabilem Wirkstoffgehalt über lange Lagerzeiträume.

Desweiteren besteht Bedarf an toxikologisch unbedenklichen Wirkstoffen, beispielsweise für Reinigungsmittel und Kosmetika, die gute organoleptische Eigenschaften aufweisen. Desweiteren sollten solche Wirkstoffe ein ausgeglichenes Wirkungsspektrum über einen möglichst breiten Wirkungsbereich aufweisen und insbesondere keine Wirkungslücken haben. Desweiteren sollten solche Wirkstoffe auch im alkalischen Bereich chemisch stabil sein.

Darüber hinaus besteht Bedarf an antimikrobiellen und/oder fungiziden Kombinationen, die auch korrosionsschützende Wirkung aufweisen oder zumindest nicht korrosiv wirken.

Somit ist es Aufgabe der vorliegenden Erfindung, eine Kombination anzugeben, die eine formaldehydfreie Konservierung mit einer erhöhten Wirksamkeit über ein breites Spektrum von Mikroorganismen bei gleichzeitig reduzierter einzusetzender Menge aufweist. Desweiteren ist es Aufgabe der Erfindung eine Kombination anzugeben, die auch in flüssiger Form farbstabil ist und deren Wirkstoffgehalt über lange Zeit auch im Alkalischen stabil bleibt. Darüber hinaus ist es Aufgabe der Erfindung eine solche Kombination anzugeben, die auch gute organoleptische Eigenschaften aufweist und ein möglichst ausgeglichenes Wirkungsspektrum besitzt und die oben genannten Nachteile vermeidet.

Gelöst wird diese Aufgabe durch eine Kombination gemäß Anspruch 1, so wie eine Verwendung gemäß Anspruch 12 oder 13. Die Unteransprüche 2 bis 11 geben vorteilhafte Weiterbildungen an.

Der erfindungsgemäßen Lösung liegt die überraschende Erkenntnis zugrunde, dass kurzkettige Guanidininsalze in Kombination mit IPBC, Isothiazolinone, Pyrithion und deren Na-, Cu- oder Zn-Salze, Thiabendazole und /oder Arcyl- oder Alkylphenole, auch substituiert, eine synergistische Wirkung entfalten, die zu antimikrobiellen und/oder fungiziden Kombinationen führt, die eine formaldehydfreie Konservierung mit einem sehr guten und ausgeglichenen Wirkungsspektrum ermöglicht. Darüber hinaus zeichnen sich solche Kombinationen überraschend durch eine erhöhte Wirksamkeit bei gleichzeitig reduzierter notwendiger Menge an Bioziden aus. Darüber hinaus können solche Kombinationen flüssig und farbstabil mit einem stabilen Wirkstoffgehalt auch im Alkalischen über lange Zeit gelagert werden. Desweiteren weisen solche Kombinationen sehr gute organoleptische und toxikologische Eigenschaften auf.

An der Eignung von kurzkettigen Guanidininsalzen ist daher überraschend, dass sie keine Kationogenität aufweisen und ihre biozide und/oder fungizide Wirkung gerade nicht über kationische Reaktionen mit Zellmembranen erklärt werden kann. Dementsprechend waren solch kurzkettige, niedermolekulare Guanidininiumsalze, also Guanidiniumsalze mit Resten, die zusammen drei bis acht C-Atome aufweisen, nicht als Biozide oder Fungizide bekannt.

Eine erfindungsgemäße Kombination mit antimikrobieller und/oder fungizider Wirkung von einem oder mehreren Fungiziden aus der Gruppe IPBC (3-Jodpropinylbutylcarbamat), Isothiazolinone, Pyrithion und dessen Na-, Cu- oder Zn-Salze, Thiabendazol, Aryl- oder Alkylphenole, auch substituierte und mindestens einem Guanidinsalz weist erfindungsgemäß die Eigenschaft auf, dass mindestens ein Guanidinsalz ein Salz von Mono- oder Dialkylguanidin oder von Diguanidinen ist. Dabei weist der Alkylrest des Monoalkylguanidins drei bis acht C-Atome auf. Die beiden Reste des Salzes des Dialkylguanidins sind dabei identisch oder nicht identisch und weisen zusammen drei bis acht C-Atome auf. Das Salz des Diguanidins weist dabei zentral zwischen den Guanidingruppen eine der folgenden Verbindungen auf:

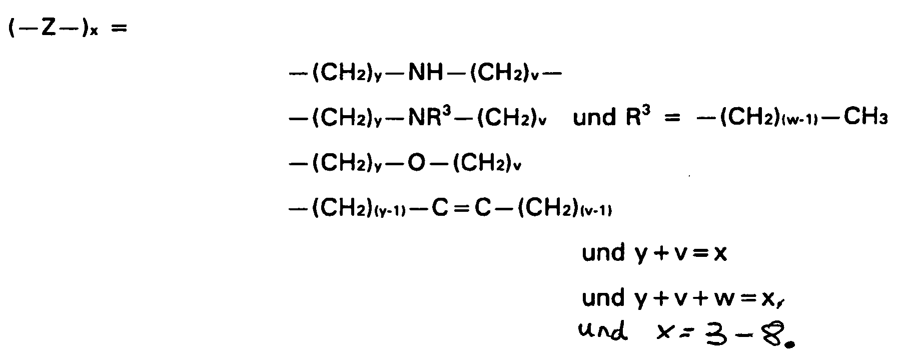

Eine solche Kombination, bei der das Verhältnis der einzelnen Komponenten beliebig variierbar ist, weist die geschilderten Vorteile auf und ist desweiteren verhältnismäßig einfach herzustellen.

Eine solche Kombination weist ein sehr breites Anwendungsgebiet auf. So kann eine solche Kombination nicht nur industriell, beispielsweise als Zusatz zu Kühl-und/oder Schmierstoffen, oder (wässrigen) Farben und Lacken eingesetzt werden, sondern auch in Reinigungsmitteln oder Kosmetika zur Anwendung gelangen.

Besonders vorteilhaft ist es, wenn die Kombination gemäß Anspruch 2 so gewählt ist, dass die Reste der Salze der Mono- oder Dialkylguanidine gesättigte, ungesättigte, verzweigte, lineare oder zyklische, auch Heteroatome enthaltende, Alkylreste sind.

Solche Kombinationen sind besonders einfach herzustellen und weisen eine besonders gute Umweltverträglichkeit auf.

Vorzugsweise sind diese Alkylreste gemäß Anspruch 3 durch Cycloalkyle, Ethoxylate, Propoxylate, Hydroxylalkyle, Alkoxyalkyle, Aminoalkyle und/oder Heterocyclen gebildet.

Besonders vorteilhaft ist es, wenn gemäß Anspruch 4 zur Salzbildung mit den Mono-, Dialkylguanidinen oder Diguaniden Schwefel-, Salz, Essig- oder organische Carbonsäuren mit sechs bis zehn C-Atomen insbesondere Glucon- oder Isononanäsure verwendet werden. Die dadurch erzeugten Salze weisen eine besonders hohe synergistische Wirkung auf und sind besonders preisgünstig und einfach herzustellen. Desweiteren kann durch sie eine korrosionsverhindernde Wirkung der Kombination erzielt werden.

Vorteilhafterweise sind die Isothiazolinone gemäß Anspruch 5 durch Methyliso thiazolinon, 5-Chlor-N-methylisothiazolinon, Benzylisothiazolinon, N-Octylisothiazolinon, Trimethylenisothiazolinon und N-Butylisothiazolinon gebildet. Diese Stoffe weisen in Verbindung mit den erfindungsgemäßen Salzen von Mono- oder Dialkylguanidinium oder Diguaniden eine besonders starke synergistische, antimikrobielle und fungizide Wirkung auf.

Bevorzugt sind die Aryl- oder Alkylphenole gemäß Anspruch 6 o-Phenylphenol oder p-Chlormetacresol. Innerhalb der Aryl- und Alkylphenole weisen diese Stoffe in Verbindung mit den erfindungsgemäßen Salzen der Mono- oder Dialkylguanidine oder Mono- oder Diguaniden eine besonders hohe synergistische, antimikrobielle und fungizide Wirkung auf. Gleiches gilt für den Einsatz von

N,N'-1,4-Butandiyl-bis(guanidin) Salz
CAS 544-05-8

N,N'-1,3-Propandiyl-bis(guanidin) Salz
CAS 62476-84-0

1,1'-Tetramethylen-bis(guanidin) Salz
CAS 36587-93-6 1-(2-Isopropylpropylamino)ethyl)guanidin Salz
CAS 14156-83-3

N,N"'-1,5-Pentandiylbisquanidiniumsalz
CAS 58585-48-1
als Diguanide gemäß Anspruch 7.

Besonders vorteilhaft ist eine Rezeptur gemäß Anspruch 8 mit
30-40 Gew.-% Alkyl-, Dialkylguanidiniumsalze oder Diguanidsalz,
40-50 Gew.-% Propylenglycol,
2 - 5 Gew.-% Tenside z.B. Polyethylenglykol-mono-dodecylether,
10-20 Gew.-% Wasser und
2-3, insbesondere 2,5 Gew.-% IPBC (technisch 98%ig).

Eine solche Kombination weist eine besonders hohe Wirksamkeit und Stabilität auf und ist desweiteren vergleichsweise einfach zu produzieren.

Besonders vorteilhaft ist es, wenn die einzelnen Komponenten derart gewählt werden, dass die Kombination gemäß Anspruch 9 sowohl antimikrobielle als auch fungizide Wirkung aufweist.

Vorteilhafterweise enthält die erfindungsgemäße Kombination gemäß Anspruch 10 weiter Wirkstoffe, funktionelle Zusatzstoffe und/oder Hilfsstoffe. Durch solche zusätzlichen Bestandteile kann die Wirksamkeit weiter erhöht werden und können zusätzliche Effekte, wie beispielsweise eine besonders gute Darreichung, und Verarbeitungsfähigkeit erreicht werden.

Besonders vorteilhaft ist es gemäß Anspruch 11 als Träger einen mehrwertigen Alkohol, insbesondere ein Diol, bevorzugt ein Glykol und bevorzugter Ethylenglykol, Propylenglykol, Butylenglykol, Pentandiol oder Glykolester und Glykolether, insbesondere Mono- und Di-Methyl-, Ethyl-, Butyl- und Hexylether von Monoglykolen und Polyglykole, zum Beispiel Ethylen, Propylen und Butylen sowie deren Ester, zum Beispiel Acetate, oder irgendwelche Gemische derselben, besonders bevorzugt Butyltriglykohl, Butyl-diglykol oder Dipropylenglykol-monomethylenether einzusetzen.

Diese Trägerstoffe haben sich als besonders geeignet erwiesen, die Wirkstoffe für eine möglichst lange Zeit stabil zu halten und sind geeignet, eine kostengünstige Produktion zu ermöglichen und die Kombination für zahlreiche Verwendungen wirksam einzusetzen.

Die Erfindung wird ebenfalls gelöst durch eine Verwendung gemäß Anspruch 12 bei der die Kombination als antimikrobielles und/oder fungizides Mittel.

Die erfindungsgemäße Kombination weist besondere Vorteile bei der Verwendung als antimikrobielles und/oder fungizides Mittel auf, wodurch eine dementsprechende Verwendung besonders bevorzugt wird.

Ebenfalls gelöst wird die Aufgabe durch eine Verwendung gemäß Anspruch 13, bei der die erfindungsgemäße Kombination als Zusatz zu Kühlschmierstoffen, Reinigungsmitteln oder wässrigen Farben und Lacken eingesetzt wird. Insbesondere für solche Einsätze hat sich die erfindungsgemäße Kombination bezüglich der oben genannten Eigenschaften und für die genannten Anwendungen besonders wichtigen Eigenschaften als besonders vorteilhaft erwiesen.

Die Ausführungen haben gezeigt, dass die erfindungsgemäßen Lösungen einen großen Vorteil bezüglich der oben genannten Aspekte aufweist. Weitere Anpassungen an die jeweils gestellten Aufgaben sind durch den Fachmann problemlos möglich, ohne den Bereich der Erfindung zu verlassen. Mögliche Ausführungsformen, die die Erfindung jedoch keineswegs beschränken, sollen anhand der folgenden Beispiele rein exemplarisch und skizzenhaft ausgeführt werden, um weitere Vorteile und Ausführungsformen anzugeben.

Beispielsweise kann eine Formulierung wie folgt gewählt werden:
2-3, insbesondere 2,5Gew.-%IPBC (Jodpropinylbutylcarbamat techn 98%)
30 - 40 Gew.-% Alkyl-, Dialkylguanidiniumsalze oder Diguanidsalze (erfindungs gemäße)
40 - 50 Gew.-% Propylenglykol
2 - 5 Gew.-% Tenside (z. B. Polyethylenglykol-mono-dodecylether)
auf 100 Gew.-% mit Wasser

Bei der obigen Formulierung ist es entscheidend wichtig, dass das wasserunlösliche Fungizid IPBC in einer Formulierung verwendet wird, die den Wirkstoff in Lösung hält (z. B. ideale Lösemittel und Tenside). Eine weitere Verbesserung wird dadurch erreicht, dass durch die Tenside eine benetzende Wirkung erzielt wird. Dadurch gelangt der biozide Wirkstoff an die Zellmembran von Mikroorganismen und kann seine Wirkung voll entfalten.

Mit dieser Formulierung wurde eine mikrobiologische Untersuchung mit 0,1 und 0,2%-igen Lösungen durchgeführt. Dabei kam als Prüfmethode einer Prüfung in Anlehnung an das Europäische Arzneibuch 1997 (entspricht DAB: VIII. 14) zum Einsatz. Als Prüfstämme wurden verwendet Pseudomonas aeruginosa, Pseudomonas putida, Pseudomonas vesicularis, Pseudomonas fluorescens, Pseudomonas cepacia, Acinetobacter spec. Desweiteren kamen die Pilze Acremonium spec. und Fusarium spec. zum Einsatz.

Nach zwei Tagen Inkubationszeit ergab sich eine Reduktion der Bakterien um 99,99% und eine Reduktion der Pilze um 100%. Zum Vergleich wurden Untersuchungen mit 0,10 und 0,20%-iger wässriger Lösung von Alkyl-, Dialkylguanidiniumsalz, Diguanidiniumsalz mit den gleichen Prüfstämmen und Pilzen durchgeführt. Nach einer zweitägigen Inkubationszeit ergab sich hier eine Reduktion der Bakterien um 0% und Reduktion der Pilze um ebenfalls 0%. Zum Vergleich wurde eine 0,1 bzw. 0,2%-ige IPBC-Lösung auf Wasserbasis mit den oben genannten Prüfstämmen und Pilzen getestet. Nach einer zweitägigen Inkubationszeit ergab sich eine Reduktion der Bakterien um 0% und eine Reduktion der Pilze um 100%.

Somit wird deutlich, dass die eingesetzten Komponenten alleine eine Reduktion der Bakterien und Pilze, wie sie die erfindungsgemäße Formulierung aufweist, nicht erklären können. Die erfindungsgemäße Wirkung wird gerade durch die beschriebene synergistische Kombination erreicht. Selbst wenn man die Reduktion der Bakterien und Pilze der beiden Bestandteile (IPBC und Guadiniumsalz) addieren würde, könnte man dadurch eine Reduktion der Bakterien um 99,99% nicht erklären.

Als weiteres Beispiel zur Ausführung der Erfindung lässt sich folgende Formulierung angeben:
15 - 25 Gew.-% o-Phenylphenol(OPP)
30 - 40 Gew.-% Alkyl-, Dialkylguanidiniumsalze oder Diguanidinsalze (erfindunggsgemäße)
20 - 40 Gew.-% Polyglykolether
2 - 5 Gew. % Tensid (z. B. Polyethylenglykol-mono-dodecylether)
0,5 Gew.-% Kalilauge (50%-ig)
auf 100 Gew.-% Wasser

In diesem Beispiel stellt die geringe Löslichkeit von OPP eine Herausforderung dar. Um die gewünschte gute Wirkung gegen Mikroorganismen in wässriger Lösung zu erzielen, werden entsprechende Lösemittel (z. B. Butyldiglykol), Tenside (z. B. (Polyethylenglykol-mono-dodecylether) und Kalilauge benötigt, was die Löslichkeit von OPP deutlich verbessert.

Dies zeigt sich auch in den durchgeführten mikrobiologischen Untersuchungen mit jeweils einer 0,1 und/oder 0,2%-igen Lösung. Diese wurden durchgeführt wie die oben geschilderten und zeigten nach zweitägiger Inkubation eine Reduktion der Bakterien um 99,9% und eine Reduktion der Pilze um 99,99%. Auch in diesem Beispiel wird die synergistische Wirkung wieder sehr deutlich.

Als weiteres Beispiel kann die Formulierung:
5 - 15 Gew.-% Natrium-pyrithion (40%)
30 - 40 Gew.-% Alkyl-, Dialkylguanidiniumsalze oder Diguanidinsalze (erfindungsgemäße)
2 - 5 Gew.-% Tenside (bspw. Polyethylenglykol-mono-dodecylether)
auf 100 Gew.-% mit Wasser
angesehen werden.

In diesem Beispiel ist Formulierung deutlich einfacher, da der Wirkstoff Natrium-pyrithion gut wasserlöslich ist. Aber auch hier ist der Zusatz von Tensiden zur Optimierung der antimikrobiellen Wirkung förderlich.

Auch diese Formulierung wurde sowohl in 0,1 und/oder 0,2%-igen wässrigen Lösungen mikrobiologisch unter den oben genannten Bedingungen untersucht und zeigte nach zwei Tagen Inkubation eine Reduktion der Bakterien um 99,9% und eine Reduktion der Pilze um 99,99%.

Als viertes Beispiel lässt sich die folgende Formulierung anführen:
5 - 15 Gew.-% Benzisothiazolin-3-on (BIT)
30 - 40 Gew.-% Alkyl-, Dialkylguanidiniumsalze und/oder Diguanidinsalze (erfindungsgemäße)
2 - 5 Gew.-% Tenside (bspw. Polyethylenglykol-mono-dodecylether)
0,5 Gew.-% Kalilauge (50%)
auf 100 Gew.-% mit Wasser

Dieses Beispiel ist dem vorstehenden Beispiel sehr ähnlich, da auch BIT im schwach alkalischen Medium gut wasserlöslich ist. Auch hier wird die antimikrobielle Wirkung weiter durch den Einsatz von Tensiden gesteigert. Auch diese Formulierung wurde mikrobiologisch unter den oben genannten Bedingung untersucht und zeigt nach zwei Tagen Inkubationszeit eine Reduktion der Bakterien um 100% und eine Reduktion der Pilze um 99,9%.

Sowohl die oben stehenden allgemeinen Ausführungen als auch die aufgeführten Beispiele zusammen mit den mikrobiologischen Untersuchungen zeigen auf, dass die erfindungsgemäße Kombination eine erhöhe synergistische Wirkung aufweist und zur Lösung der Aufgabe sehr gut geeignet ist. Weitere Formulierungen im Die Schutzbereiche lassen sich durch den Fachmann je nach Aufgabenstellung einfach auffinden und an den jeweiligen Einsatzzweck anpassen.

## Patentansprüche

1. Kombination mit antimikrobieller und/oder fungizider Wirkung von einem oder mehreren Fungiziden aus der Gruppe, die IPBC (3-lodpropinylbutylcarbamat), Isothiazolinone, Pyrithion und dessen Na-, Cu-oder Zn-Salze, Thiabendazol, Aryl- oder Alkylphenole, auch substituierte, umfasst, und mindestens einem Guanidinsalz, **dadurch gekennzeichnet, dass** das mindestens eine Guanidinsalz folgende chemische Strukturen besitzt:
Salze von Mono- oder Dialkylguanidin a bzw. b,
a) 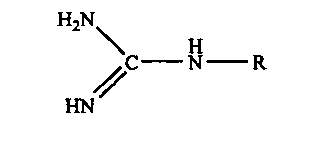
b) 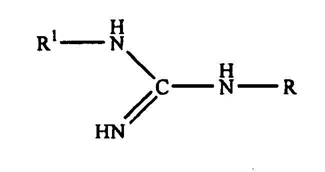
worin die Alkylreste R, R¹ gemeinsam 3 - 8 C-Atome aufweisen:
oder Diguanidinen c,
c)

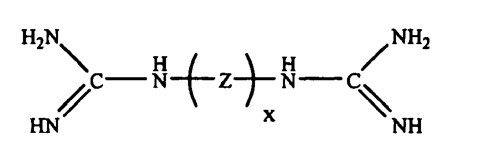

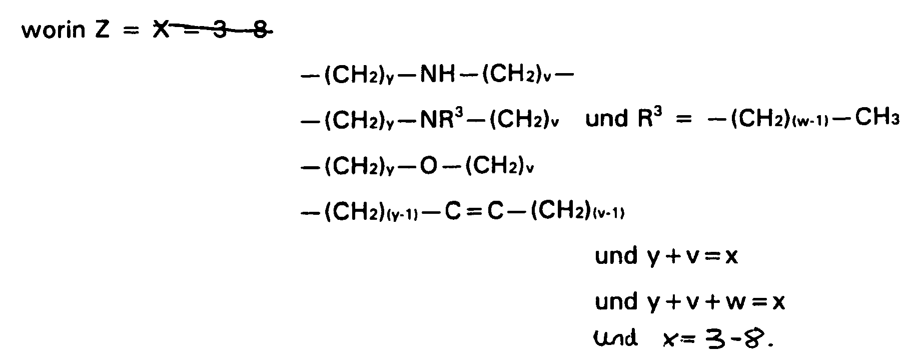

2. Kombination nach Anspruch 1, **dadurch gekennzeichnet, dass** die Alkylreste Z, R, R¹ gesättigt, ungesättigt, verzweigt, linear oder zyklisch, auch Heteroatome enthaltend, sind.

3. Kombination nach Anspruch 2, **dadurch gekennzeichnet, dass** die Alkylreste durch Cycloalkyle, Ethoxylate, Propoxylate, Hydroxyalkyle, Alkoxyalkyle, Aminoalkyle, Aminoalkyle oder Heterocyclen gebildet sind.

4. Kombination nach Anspruch 1 - 3, **dadurch gekennzeichnet, dass** die Salze von Mono-, Dialkylguanidin oder Diguanidinen von der Schwefel-, Salz-, Essig- oder organischen Carbonsäuren mit 6 - 10 C-Atomen, insbesondere Glukon- oder iso-Nonansäure, stammen.

5. Kombination nach Anspruch 1 - 4, **dadurch gekennzeichnet, dass** die Isothiazolinone durch Methylisothiazolinon, 5-Chlor-N-methylisothiazolinon, Benzylisothiazolinon, N-Octylisothiazolinon, Trimethylenisothiazolinon und N-Butylisothiazolinon gebildet sind.

6. Kombination nach einem der Ansprüche 1 - 4, **dadurch gekennzeichnet, dass** die Aryl- oder Alkylphenole o-Phenylphenol oder p-Chlormetacresol sind.

7. Kombination nach einem oder mehreren der vorstehenden Ansprüche 1 oder 3 - 6, **gekennzeichnet durch** eines oder mehrere der folgenden Mono- und Diguanidine:
N,N'-1,4-Butandiyl-bis(guanidin) Salz
CAS 544-05-8
N,N'-1,3-Propandiyl-bis(guanidin) Salz
CAS 62476-84-0
1,1'-Tetramethylen-bis(guanidin) Salz
CAS 36587-93-6
1-(2-Isopropylpropylamino)ethyl)guanidin Salz
CAS 14156-83-3
N,N"'-1,5-Pentandiylbisguanidinsalz
CAS 58585-48-1

8. Kombination nach einem oder mehreren der vorstehenden Ansprüche 1 - 7, **gekennzeichnet durch** folgende Zusammensetzung:
30-40 Gew.-% Alkyl-, Dialkylguanidinsalze oder Diguanidinsalz
40-50 Gew.-% Propylenglycol
2 - 5 Gew.-% Tenside z.B. Polyethylenglykol-mono-dodecylether
10-20 Gew.-% Wasser
2-3, insbesondere 2,5 Gew.-% IPBC (technisch 98%ig)

9. Kombination nach einem der vorstehenden Ansprüche, **dadurch gekennzeichnet, dass** die Kombination sowohl antimikrobielle und fungizide Wirkung aufweist.

10. Kombination nach einem der vorstehenden Ansprüche, **dadurch gekennzeichnet, dass** die Kombination weitere Wirkstoffe, funktionelle Zusatzstoffe und/oder Hilfsstoffe enthält.

11. Kombination nach einem der vorstehenden Ansprüche, **dadurch gekennzeichnet, dass** die Kombination als flüssigen Träger einen mehrwertigen Alkohol, insbesondere ein Diol, bevorzugt ein Glykol und bevorzugter Ethylenglykol, Propylenglykol, Butylenglykol, Pentandiol oder Glykolester und Glykolether, insbesondere Mono- und Di-Methyl-, Ethyl-, Buthyl- und Hexylether von Monoglykolen und Polyglykole, zum Beispiel Ethylen, Propylen und Butylen sowie deren Ester, zum Beispiel Acetate, oder irgendwelche Gemische derselben, besonders bevorzugt Butyltriglykohl, Butyl-diglykohl oder Dipropylenglykol-mono-methylether, enthält.

12. Verwendung der Kombination nach einem vorstehenden Anspruch als antimikrobielles und/oder fungizides Mittel.

13. Verwendung der Kombination gemäß einem der vorstehenden Ansprüche 1 bis 11 als Zusatz zu Kühlschmierstoffen, Reinigungsmittel oder wässrigen Farben und Lacken.

## Claims

1. A combination with anti-microbial and/or fungicidal effects, consisting of one or several fungicides of the group comprising IPBC (3-iodpropinyl butylcarbamate), isothiazolinone, pyrithion and its Na, Cu and Zn salts, thiabendazole, aryl or alkyl phenols, even substituted, and at least one guanidine salt, **characterised in that** guanidine salt presents the following chemical structures:
mono or dialkyl guanidine salts, a or b,
a) 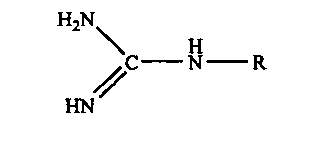
b) 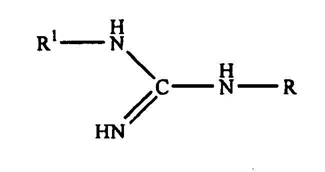 where alkyl residues R, R¹ exhibit together 3 - 8 C atoms:
or diguanidines c,
c) 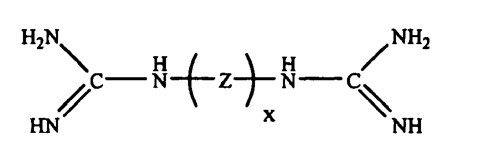 where

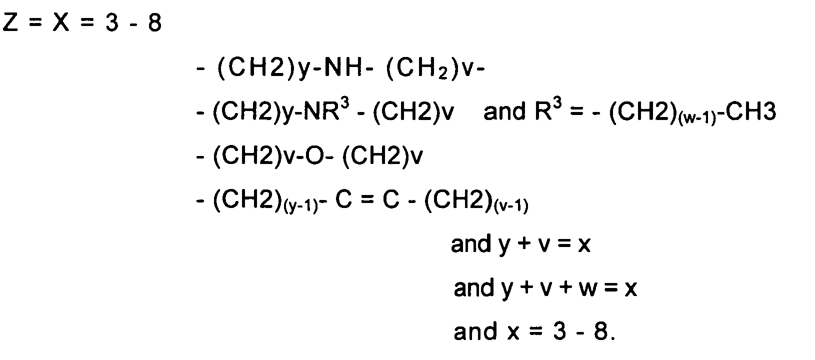

2. A combination according to claim 1, **characterised in that** the alkyl residues Z, R, R¹ are saturated, unsaturated, branched, linear or cyclic, possible comprise hetero-atoms.

3. A combination according to claim 2, **characterised in that** the alkyl residues consist of cyclo alkyls, ethoxylates, propoxylates, hydroxyalkyls, alkoxyalkyls, aminoalkyls or heterocycles.

4. A combination according to any of the claims 1 to 3, **characterised in that** the mono, dialkyl guanidine ou diguanidine salts stem from sulfur, salt, acetic or organic carbon acid having 6 to 10 C atoms, in particular gluconic or iso-nanonic acid.

5. A combination according to any of the claims 1 to 4, **characterised in that** isothiazolinones consist of methylisothiazolinone, 5-chlor-N-methylisothiazolinone, benzylisothiazolinone, N-octylisothiazolinone, trimethylenisothiazolinone and N-butylisothiazolinone.

6. A combination according to any of the claims 1 to 4, **characterised in that** the aryl or alkyl phenols are o-phenylphenol or p-chlormetacresol.

7. A combination according to any of the previous claims 1 or 3 - 6, **characterised by** one or several of the following mono or diguanidines:
N'-1,4-butandiyl-bis(guanidine) salt
CAS 544-05-8
N,N'-1,3-propandiyl-bis(guanidine) salt
CAS 62476-84-0
1,1 '-tetramethylen-bis(guanidine) salt
CAS 36587-93-6
1 -(-isopropylpropyiamino-ethyl)guanidine salt
CAS 14156-83-3
N,N"'-1,5-pentandiylbisguanidine salt
CAS 58585-48-1

8. A combination according to any of the previous claims 1 - 7, **characterised by** the following composition:
30-40% in weight alkyl, dialkyl guanidine or diguanidine salts
40-50% in weight glycol propylene
2 - 5 % in weight surfactants, for instance polyethylene glycol mono-dodecylether
10-20% in weight water
2-3, in particular 2.5% in weight IPBC (technically 98%)

9. A combination according to claim 1, **characterised in that** the combination has anti-microbial and fungicidal effects.

10. A combination according to any of the previous claims, **characterised in that** the combination contains other active principles, functional additives and/or adjuvants.

11. A combination according to any of the previous claims, **characterised in that** the combination contains as a liquid excipient polyvalent alcohol, in particular diol, preferably glycol and most preferably glycol ethylene, propylene glycol, butylene glycol, pentandiol or glycol ester and glycol ether, in particular monoglycol and polyglycol mono- and dimethyl, ethyl, butyl and hexyl ether, for instance ethylenes, propylenes and butylenes as well as esters, such as acetates, or any mixture thereof, most preferably butyl triglycol, butyl diglycol or dipropylene glycol monomethyl ether.

12. Application of the combination according to any previous claim as an anti-microbial and/or fungicidal product.

13. Application of the combination according to any of the previous claims 1 to 11 as an additive for cold lubricants, cleaning products or liquid colours and varnishes.

## Revendications

1. Combinaison aux effets antimicrobiens et/ou fongicides, composée d'un ou de plusieurs fongicides du groupe comprenant l'IPBC (3-iodpropinyle butylcarbamate), l'isothiazolinone, le pyrithion et ses sels Na, Cu et Zn, le thiabendazol, les aryl ou alkyl phénols, même substitués, et au moins un sel de guanidine, **caractérisée en ce que** le sel de guanidine présente les structures chimiques suivantes:
sels de mono ou dialkyl guanidine a ou b,
a) 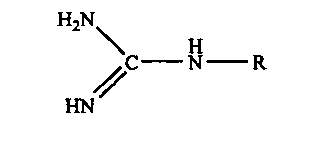
b) 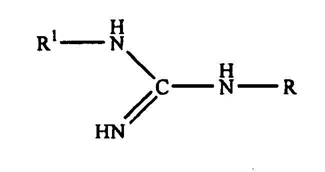 où les résidus alkyls R, R¹ présentent ensemble 3 - 8 atomes C:
ou des diguanidines c,
c) 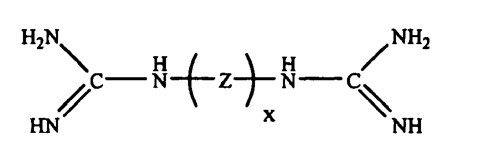 où

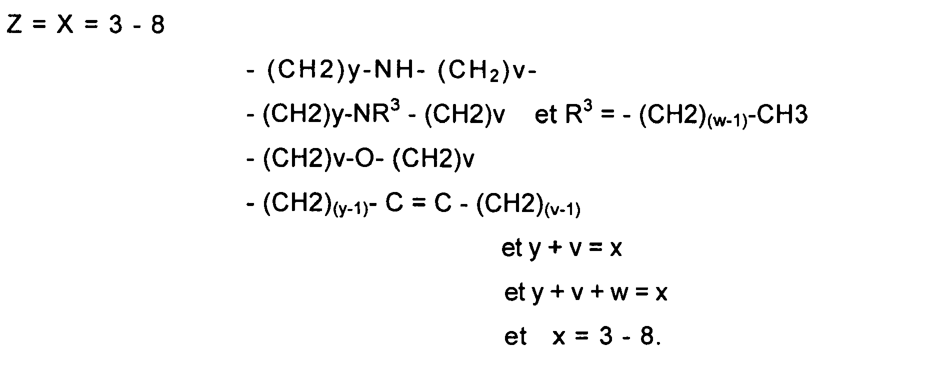

2. Combinaison selon la revendication 1, **caractérisée en ce que** les résidus alkyls Z, R, R¹ sont saturés, insaturés, ramifiés, linéaires ou cycliques, voire comprennent des hétéro-atomes.

3. Combinaison selon la revendication 2, **caractérisée en ce que** les résidus alkyls sont constitués de cyclo alkyls, d'éthoxylates, de propoxylates, d'hydroxyalkyls, d'alkoxyalkyls, d'aminoalkyls ou d'hétérocycles.

4. Combinaison selon l'une des revendications 1 à 3, **caractérisée en ce que** les sels de mono, dialkyl guanidine ou diguanidine proviennent de l'acide sulfurique, muriatique, acétique ou carbonique organique possédant 6 à 10 atomes C, en particulier de l'acide gluconique ou iso-nanonique.

5. Combinaison selon l'une des revendications 1 à 4, **caractérisée en ce que** les isothiazolinones sont constitués de méthylisothiazolinone, de 5-chlore-N-méthylisothiazolinone, de benzylisothiazolinone, de N-octylisothiazolinone, de triméthylenisothiazolinone et de N-butylisothiazolinone.

6. Combinaison selon l'une des revendications 1 à 4, **caractérisée en ce que** les aryl or alkyl phénols sont du o-phénylphénol ou p-chlormétacrésol.

7. Combinaison selon une ou plusieurs des revendications précédentes 1 ou 3-6, **caractérisé par** une ou plusieurs des mono ou diguanidines suivantes:
Sel de N'-1,4-butandiyl-bis(guanidine)
CAS 544-05-8
Sel de N,N'-1,3-propandiyl-bis(guanidine)
CAS 62476-84-0
Sel de 1,1 '-tétraméthylène-bis(guanidine)
CAS 36587-93-6
Sel de 1-(-Isopropylpropyiamino-éthyle)guanidine
CAS 14156-83-3
Sel de N,N"'-1,5-pentandiylbisguanidine
CAS 58585-48-1

8. Combinaison selon une ou plusieurs des revendications précédentes 1-7,**caractérisé par** la composition suivante:
30-40 % en poids de sels d'alkyl, dialkyl guanidine ou diguanidine 40-50 % en poids de propylène glycol
2 - 5 % en poids de tensioactifs, par exemple mono-dodécyléther de polyéthylène glycol
10-20 % en poids d'eau
2-3, en particulier 2,5 % en poids d'IPBC (techniquement à 98%)

9. Combinaison selon la revendication 1, **caractérisée en ce que** la combinaison a des effets antimicrobiens et fongicides.

10. Combinaison selon l'une des revendications précédentes, **caractérisée en ce que** la combinaison contient d'autres principes actifs, des additifs fonctionnels et/ou des adjuvants.

11. Combinaison selon l'une des revendications précédentes, **caractérisée en ce que** la combinaison contient comme excipient liquide un alcool polyvalent, en particulier un diol, de préférence un glycol et de préférence particulière un éthylène glycol, un propylène glycol, un butylène glycol, un pentandiol ou bien un glycol ester et un glycol éther, en particulier un éther mono- et diméthylique, éthylique, butylique et hexylique de monoglycols et polyglycols, par exemple les éthylènes, propylènes et butylènes de même que les esters, comme les acétates, ou tout mélange de ceux-ci, de préférence particulière le butyl triglycol, le butyl diglycol ou l'éther monométhylique de dipropylène glycol.

12. Application de la combinaison selon une quelconque revendication précédente comme produit antimicrobien et/ou fongicide.

13. Application de la combinaison selon l'une des revendications précédentes 1 à 11 comme additif pour lubrifiants à froid, produits de nettoyage ou couleurs et vernis liquides.
